**Europäisches Patentamt**

**European Patent Office**

**Office européen des brevets**

(11) Veröffentlichungsnummer : **0 027 582**
**B1**

# (12) EUROPÄISCHE PATENTSCHRIFT

(45) Veröffentlichungstag der Patentschrift :
**15.12.82**

(21) Anmeldenummer : **80105992.4**

(22) Anmeldetag : **03.10.80**

(51) Int. Cl.³ : **A 01 N 59/12, C 08 F 8/04,**
**C 08 F 126/10**

(54) **Verfahren zur Herstellung von Polyvinylpyrrolidon-Jod.**

(30) Priorität : **12.10.79 DE 2941387**

(43) Veröffentlichungstag der Anmeldung :
**29.04.81 (Patentblatt 81/17)**

(45) Bekanntmachung des Hinweises auf die Patenterteilung : **15.12.82 Patentblatt 82/50**

(84) Benannte Vertragsstaaten :
**AT BE CH DE FR GB IT LI LU NL SE**

(56) Entgegenhaltungen :
**DE B 1 037 075**
**US A 2 914 516**

(73) Patentinhaber : **BASF Aktiengesellschaft**
**Carl-Bosch-Strasse 38**
**D-6700 Ludwigshafen (DE)**

(72) Erfinder : **Denzinger, Walter**
**Wormser Landstrasse 65**
**D-6730 Speyer (DE)**
Erfinder : **Straub, Ferdinand, Dr.**
**Ziegelstrasse 20**
**D-6832 Hockenheim (DE)**
Erfinder : **Hartmann, Heinrich, Dr.**
**Weinheimer Strasse 46**
**D-6703 Limburgerhof (DE)**

# 0 027 582

## Verfahren zur Herstellung von Polyvinylpyrrolidon-Jod

Die Erfindung betrifft ein Verfahren zur Herstellung des Reaktionsproduktes aus Polyvinylpyrrolidon (PVP) und elementarem Jod, im allgemeinen als Polyvinylpyrrolidon-Jod, kurz PVP-Jod bezeichnet, das in steigendem Maße wegen seiner germiciden, bakteriziden, fungiziden und desinfizierenden Eigenschaften Verwendung findet.

PVP-Jod kommt im allgemeinen als braunes Pulver in den Handel, das etwa 11 % verfügbares Jod, d.h. wirksames Jod, das mit Natriumthiosulfat titrierbar ist, und darüber hinaus noch ca. 5,5 % Jod in Form des Jodids enthält. Bei einem Jod : Jodidverhältnis von 2 : 1 ist PVP-Jod-Komplex die Jodbindung so stark, daß Jodgeruch nicht mehr wahrnehmbar ist und ein in dem Gasraum über PVP-Jod eingebrachtes feuchtes Kaliumjodidstärkepapier nicht gefärbt wird. Für die Praxis gilt die Forderung, daß das PVP-Jod in seinen Zubereitungen, insbesondere in wäßriger Lösung, bei der Lagerung möglichst wenig an verfügbarem Jod verliert, d.h. möglichst stabil ist.

Zur Herstellung eines möglichst stabilen PVP-Jods werden die verschiedensten Verfahrensmaßnahmen beschrieben, beispielsweise wird das pulverförmige PVP-Jod gemäß der DE-PS 10 37 075 einer nachträglichen längeren Temperaturbehandlung bei 90 bis 100 °C unterworfen, und in der US-PS 2 900 305 wird beschrieben, daß für die Herstellung eines stabilen PVP-Jods ein PVP mit einem bestimmten Gehalt an Feuchtigkeit zu verwenden ist. Gemäß der US-PS 2 826 535 wird ein Zusatz von Natriumhydrogencarbonat und der US-PS 3 028 300 wird ein Zusatz von Jodid in Form von Jodwasserstoff oder Alkalijodid verwendet. In der DE-AS 24 39 197 wird beschrieben, daß ein in einem wasserfreien organischen Lösungsmittel polymerisiertes Polyvinylpyrrolidon zur Herstellung eines stabilen PVP-Jods besonders geeignet ist. Eine weitere Verbesserung der Jodstabilität wird durch eine Behandlung des in einem organischen Lösungsmittel hergestellten Polyvinylpyrrolidons mit Wasserdampf, wie es die DE-OS 25 23 618 lehrt, erreicht.

Trotzdem ist die Stabilität der im Handel befindlichen Produkte nicht immer befriedigend, besonders dann, wenn ein verhältnismäßig niedermolekulares PVP gefordert wird. PVP-Jod findet zunehmende Verwendung zur Desinfektion von großflächigen Wunden und Körperhöhlen, wobei die Verwendung von handelsüblichem PVP-Jod aus einem höhermolekularem PVP zur Speicherung von PVP im Körper führen kann. Es hat sich gezeigt, daß die nach dem Stand der Technik, z.B. DE-PS 10 37 075, US-PS 2 900 305, US-PS 2 826 532, US-PS 3 028 300 oder US-PS 3 898 326, hergestellten Jodophore mit einem niedermolekularen PVP eine ungenügende Jodstabilität aufweisen, wenn das PVP nach dem Stand der Technik durch Polymerisation in Wasser als Lösungsmittel hergestellt wird. Das nach der DE-AS 24 39 197 oder DE-OS 25 23 618 hergestellte PVP-Jod liefert zwar gute Jodstabilitäten, jedoch ist die Herstellung des PVP's durch Polymerisation in einem organischen Lösungsmittel und die anschließende Wasserdampfbehandlung doch recht aufwendig und nicht optimal wirtschaftlich, da das zur Polymerisation benutzte Lösungsmittel nur sehr schwer gereinigt und wiederverwendet werden kann.

Aufgabe der vorliegenden Erfindung ist es, ein wirtschaftliches Verfahren zur Herstellung eines insbesondere in seinen wäßrigen Lösungen stabilen PVP-Jods mit einem Jod : Jodid-Verhältnis von wenigsten 2 : 1 zu finden. Das PVP-Jod muß selbstverständlich auch den Forderungen der Arzneibücher, wie der United States Pharmacopöe XIX, entsprechen und beispielsweise soll gemäß Defence Medical Purchase Description (Nr. 4, 1972) der Jodverlust einer wäßrigen PVP-Jodlösung mit einem Gehalt an verfügbarem Jod von 1 % nach 14-tägiger Lagerung bei 52 °C nicht mehr als 12 % betragen.

Die Lösung der Aufgabe besteht in einem Verfahren zur Herstellung eines stabilen Polyvinylpyrrolidon-Jods, bei dem man ein Polyvinylpyrrolidon mit einem K-Wert von 10 bis 50, das einer Hydrierung unterworfen wurde, mit Jod in üblicher Weise umsetzt.

Gegenstand der Erfindung ist insbesondere die Herstellung eines stabilen PVP-Jods mit einem verhältnismäßig niedrigmolekularen PVP mit einem K-Wert von 10 bis 20, das aufgrund des niederen K-Wertes bei der Anwendung vollständig aus dem menschlichen Körper wieder ausgeschieden wird.

Geeignet ist das Abmischen von festem pulverförmigem Polyvinylpyrrolidon mit fein pulverisiertem Jod beispielsweise in einem Doppelkonus- oder Taumelmischer bei Raumtemperatur oder leicht erhöhter Temperatur bis zu 50 °C. Zweckmäßig erfolgt anschließend eine Temperaturbehandlung von 5 bis 20 Stunden bei 70 bis 100 °C.

Die verwendete Jodmenge beträgt in der Regel 5 bis 25 %, bevorzugt 10 bis 20 %, bezogen auf das Gesamtgewicht des PVP-Jods.

Gegebenenfalls kann bei der Herstellung ein Jodid, insbesondere Kalium-, Natrium oder Ammoniumjodid, in einer Menge von 5 bis 20 %, bezogen auf das Gesamtgewicht, zugesetzt werden.

Manchmal ist es von Vorteil, zur Beschleunigung der Jodidbildung, der Mischung aus Polyvinylpyrrolidon und Jod ein Reduktionsmittel zuzusetzen, wobei Ameisensäure und Oxalsäure besonders geeignet sind.

Auch die direkte Herstellung von stabilen wäßrigen PVP-Jodlösungen ist mit dem erfindungsgemäß zu verwendenden Polyvinylpyrrolidon möglich. Die Herstellung kann durch Mischen des Polyvinylpyrrolidons, Jod und Jodids in Wasser 20 bis 70 gewichtsprozentigen wäßrigen Lösungen bei Raumtemperatur erfolgen, wobei das Jod : Jodid-Verhältnis wenigstens 2 : 1 betragen soll. Gegebenenfalls kann aus der PVP-Jodlösung dann das Festprodukt durch einen Trocknungsprozeß, beispielsweise durch Sprühtrock-

2

nung oder Sprühgranulierung, erhalten werden.

Zur Herstellung des erfindungsgemäßen Polyvinylpyrrolidon-Jods kann von einem Polyvinylpyrrolidon der verschiedensten Herstellungsarten, wie beispielsweise der Lösungspolymerisation in Wasser oder organischen Lösungsmitteln oder der Fällungspolymerisation in organischen Lösungsmitteln, ausgegangen werden, wobei es aus wirtschaftlichen Gründen besonders vorteilhaft ist, daß ein in Wasser polymerisiertes Polyvinylpyrrolidon, dessen Nachteile bekannt sind, zur Herstellung eines stabilen PVP-Jods verwendet werden kann.

Das verwendete Polyvinylpyrrolidon hat einen K-Wert von 10 bis 50, wobei ein Polyvinylpyrrolidon mit einem K-Wert von 10 bis 20 ganz besonders bevorzugt ist.

Die Hydrierung des Polyvinylpyrrolidons erfolgt nach den üblichen, bekannten Verfahren. So kann die Hydrierung mit Wasserstoff in Gegenwart eines Hydrierkatalysators oder durch die Behandlung mit einem komplexen Hydrid erfolgen. Zweckmäßigerweise erfolgt die Hydrierung mit Wasserstoff in 5 bis 50 gewichtsprozentiger wäßriger Lösung bei einer Temperatur von 20 bis 100 °C, bevorzugt 50 bis 80 °C, und einem Wasserstoffdruck von 50 bis 500 bar, bevorzugt 200 bis 300 bar, innerhalb 1 bis 24 Stunden, wie es beispielsweise in der US-PS 2 914 516 beschrieben ist. Als Katalysatoren sind beispielsweise die üblichen Platin- und Palladiumkatalysatoren sowie Raney-Nickel geeignet.

Eine besonders bevorzugte Ausführungsform der Hydrierung ist die Behandlung des Polyvinylpyrrolidons mit einem komplexen Hydrid, wobei — bezogen auf das Gewicht des PVP's — 0,1 bis 10, vorzugsweise 0,5 bis 5 %, zur Anwendung gelangen. Als Hydride verwendet man vor allem solche, die, wie Natrium- und Lithiumboranat, wasserlöslich sind, doch läßt sich die Reaktion auch mit anderen, wie $NaBH(OCH_3)_3$, $NaAlH_4$, $LiAlH_4$, $NaAlH_2(OCH_2OCH_3)_2$ oder $LiAlH[OC(CH_3)_3]$ durchführen. Die stark reaktiven komplexen Hydride werden nur in solchen Mengen eingesetzt, daß die Lactamgruppe des Polyvinylpyrrolidons nicht angegriffen wird. Bevorzugt sind Natriumhydrid, Lithiumborhydrid oder Lithiumaluminiumhydrid.

Die Reaktion mit den komplexen Hydriden wird möglichst in Wasser durchgeführt, was mit Lithium und Natriumboranat realisierbar ist. Bei den anderen verwendet man zweckmäßigerweise Lösungsmittel, wie niedere Alkohole, z.B. Methanol, Äthanol, Iso- und n-Propanol, N-Butanol- oder tert.-Butanol, Äther, wie Dioxan oder Tetrahydrofuran, oder Aromaten, wie Benzol, Toluol oder Xylol. Die Reaktion wird bei Temperaturen von 1 bis 150, vorzugsweise 15 bis 80 °C durchgeführt. Sie richtet sich nach dem Siedepunkt der Lösungsmittel. Wenn man in wäßrigen oder alkoholischen Lösungsmitteln arbeitet, stellt man im allgemeinen einen pH-Wert von ca. 7 vor der Reaktion ein. Die Dauer der Reaktion schwankt zwischen 0,5 und 24, vorzugsweise 2 bis 8 Stunden.

Es ist bekannt, daß durch die oxidative Wirkung des zur Polymerisation verwendeten Peroxids in Polyvinylpyrrolidon Carboxylgruppen entstehen können. Für diesen speziellen Fall kann es zweckmäßig sein, diese vor der Umsetzung mit dem Hydrid nach einer üblichen Methode, z.B. mit Diazomethan, zu verestern.

Es hat sich als sehr nützlich erwiesen, nach der Umsetzung mit dem komplexen Hydrid die Polymerisatlösung über Ionenaustauscher zu reinigen. Geeignet sind z.B. Ionenaustauscher auf Polystyrolbasis mit Sulfonsäure-, Carboxyl- oder mit quarternären Ammoniumgruppen oder auf Basis von sauren oder basischen Silikaten, wie sie z.B. unter den Handelsnamen ®AMBERLITE (Rohm & Haas Comp.) und ®LEWATIT (Bayer AG) bekannt sind.

Die folgenden Beispiele erläutern die Erfindung. Angegebene Teile sind Gewichtsteile. Die K-Werte werden nach H. Fikentscher, Cellulose-Chemie, 13, 58-64 und 71-74 (1932) in 5 %igen wäßrigen Lösungen bei 20 °C bestimmt, dabei bedeutet $K = k \cdot 10^3$. Die Bestimmung des Jodverlustes erfolgt durch 15-stündige Lagerung einer wäßrigen PVP-Jodlösung mit einem Gehalt an verfügbarem Jod von 1 % bei 80 °C. Die höhere Temperatur von 80 °C hat den Vorteil, daß die umständlichere 14-tägige Lagerung bei 52 °C umgangen werden kann und vergleichbare Werte erhalten werden. Die CO-Zahl wurde gemäß DGF-Einheitsmethode C-V18 (53) gemessen. Das benutzte Lewatit S 100 ist ein Standardkationenaustauscher und Lewatit M 500 ein Standardanionenaustauscher.

Beispiel 1

1a) 750 Teile Vinylpyrrolidon werden in 250 Teilen Wasser gelöst, mit 0,5 Teilen 0,01 %iger Kupfer-IIchloridlösung und mit 30 Teilen 30 %iger Wasserperoxid-Lösung versetzt und 6 Stunden lang bei 70 °C und einem pH-Wert von 7,6 polymerisiert. Anschließend wird die Polymerisatlösung gefriergetrocknet. Das erhaltene PVP weist einen K-Wert von 17, eine CO-Zahl [DGF Einheitsmethode C-V18 (53)] von 23 und einen Wassergehalt von 2,6 % auf.

1b) 100 g PVP aus Beispiel 1a) werden in 100 ml Wasser gelöst, mit wäßrigem Ammoniak ein pH-Wert von 7 eingestellt, 5 g Raney-Nickel zugesetzt und 8 Stunden bei 50 °C und einem Wasserstoffdruck von 200 bar im Hydrierautoklav hydriert. Das Raney-Nickel wird abfiltriert und das PVP gefriergetrocknet. Es hat eine CO-Zahl von 7 sowie einen Wassergehalt von 2,9 %.

1c) 100 Teile des PVP gemäß 1a) werden in 160 Teilen Wasser gelöst, mit 10 Raumteilen Ammoniak wird ein pH-Wert von 7,5 eingestellt. Die Lösung wird portionsweise mit 2 Teilen Natriumboranat versetzt. Es wird ca. 1 Stunde bei Raumtemperatur gerührt, man läßt dann über Nacht stehen und reinigt hintereinander über 2 000 Teile Lewatit S 100 und 2 000 Teile Lewatit M 500. Anschließend wird die Lösung gefriergetrocknet. Die CO-Zahl ist 5 und der Wassergehalt beträgt 2,3 %.

1d) 200 Teile PVP gemäß Beispiel 1a) werden in 250 Raumteilen Äthanol gelöst und zur Veresterung eventueller Carboxylgruppen mit Diazomethan bis zur bleibenden Gelbfärbung versetzt. Man läßt 2 Tage bei Raumtemperatur stehen, destilliert mit Wasserdampf das Äthanol ab und trocknet die wäßrige Lösung im Sprühtrockner. Man erhält 140 Teile PVP. Davon werden 50 Teile in 225 Teilen Dioxan gelöst und mit 0,5 Teilen Natriumboranat und 1,15 Teilen Lithiumbromid, so daß Lithiumboranat das eigentliche Reduktionsmittel ist, versetzt. Es bildet sich eine Trübung, man läßt über Nacht stehen, setzt 80 Teile Wasser zu und destilliert das Dioxan mit Wasserdampf ab. Die wäßrige Lösung wird hintereinander über 2 000 Teile Lewatit S 100 und 2 000 Teile Lewatit M 500 gereinigt und sprühgetrocknet. Die CO-Zahl ist 2, der Wassergehalt beträgt 3 %.

Beispiel 2

2a) 500 Teile Vinylpyrrolidon werden in 400 Teilen Wasser gelöst, mit 1 Teil 0,01 %iger Kupferchloridlösung und mit 125 Teilen 30 %iger Wasserstoffperoxidlösung versetzt und 7 Stunden bei 70 °C polymerisiert. Zur Einhaltung eines pH-Wertes von 7,5 werden während der Polymerisation 27 Raumteile 25 %igen Ammoniaks zudosiert. Das feste PVP wird durch Gefriertrocknung gewonnen. Die CO-Zahl beträgt 34 und der Wassergehalt 2,3 %.

2b) Die Polymerisation erfolgt gemäß 2a). Die Polymerisatlösung wird anschließend bei Raumtemperatur portionsweise mit 25 Teilen Natriumboranat versetzt und 5 Stunden gerührt. Man läßt über Nacht stehen und reinigt die Lösung, indem man sie mit 2 000 Raumteilen Lewatit S 100 und 2 000 Raumteilen Lewatit M 500 behandelt (Ionenaustausch). Das PVP wird durch Gefriertrocknung gewonnen. Das Polymerisat hat einen K-Wert von 14, eine CO-Zahl von 4,3 und der Wassergehalt beträgt 2,6 %.

Beispiel 3

3a) In einem mit Rührer versehenen Glaskolben mit Rückflußkühler werden 500 Teile Vinylpyrrolidon mit 214 Teilen Isopropanol zusammengegeben und nach Zugabe von 5 Teilen tert.-Butylhydroperoxid bis zum Sieden erhitzt (96 °C). Nach dem Erreichen der Siedetemperatur werden 0,5 ppm Kupferacetylacetonat, berechnet auf das Gewicht des Vinylpyrrolidons, in Form einer stark verdünnten Lösung in 10 Teilen Isopropanol, zugesetzt und der Ansatz so lange erhitzt, bis der Restgehalt an Vinylpyrrolidon < 0,5 % ist. Anschließend wird die Lösung mit Wasser auf einen PVP-Gehalt von 30 % eingestellt und mit Wasserdampf ausgeblasen, bis nach Erreichen einer Übergangstemperatur von 98 °C 180 % Destillat, bezogen auf PVP, angefallen sind. Die Hälfte der Lösung wird nun sprühgetrocknet. Das Festprodukt besitzt einen K-Wert von 30,5, eine CO-Zahl von 2,5 und einen Wassergehalt von 2,1 %.

3b) Die andere Hälfte der nach Beispiel 3a) hergestellten Polymerisatlösung wird mit 10 Raumteilen Ammoniak auf einen pH-Wert von 7,5 eingestellt und portionsweise mit 2,5 Teilen Natriumboranat versetzt. Es wird ca. 1 Stunde bei Raumtemperatur gerührt. Man läßt dann über Nacht stehen und reinigt hintereinander über 1 000 Teile Lewatit S 100 und 1 000 Teile Lewatit M 500, anschließend wird die Lösung in einem Sprühtrockner getrocknet. Das erhaltene Polymere besitzt eine CO-Zahl von < 1 und einen Wassergehalt von 3,6 %.

Beispiel 4

4a) In einem Glasrührkolben werden 225 Teile Heptan, 111 Teile Vinylpyrrolidon, 1,4 Teile Polyvinyläthyläther vom K-Wert 50 als Dispergierhilfsmittel eingefüllt und 1/4 Stunde mit einem schwachen Stickstoffstrom gespült, dann wird der Ansatz auf 70 °C erhitzt, 0,6 Teile Azoisobutyronitril zugesetzt und 6 Stunden bei 70 bis 75 °C erhitzt. Das Polymere fällt als feines Korn aus, welches nach dem Abkühlen abfiltriert und bei 50 °C unter vermindertem Druck getrocknet wird. Der K-Wert des Polymeren ist 49 und die CO-Zahl 2,0.

4b) Die Polymerisation wird wie unter a) durchgeführt und das Polymere nach dem Trocknen in 400 Teile dest. Wasser gelöst. Anschließend werden 2 g Natriumboranat zugesetzt und bei Raumtemperatur über Nacht gerührt. Anschließend wird die Lösung nacheinander mit 250 Raumteilen Lewatit S 100 und 250 Raumteilen Lewatit M 500 behandelt. Nach dem Gefriertrocknen hat das Polymerisat die CO-Zahl von 1,0 und einen Wassergehalt von 1,6 %.

Herstellung von PVP-Jod aus Polyvinylpyrrolidon nach den Beispielen 1 bis 4 :

83 Teile Polyvinylpyrrolidon werden mit 17 Teilen feingemahlenem Jod in einem Taumelmischer 5 Stunden gemischt und anschließend auf 90 °C erhitzt und 20 Stunden bei 90 °C getempert. Anschließend wird der Jodverlust bestimmt.

4

TABELLE 1

| | Polyvinylpyrrolidon nach Beispiel | | | PVP-Jod |
| Nr. | K-Wert | CO-Zahl | $H_2O$-Gehalt [%] | Jodverlust [%] |
|---|---|---|---|---|
| 1a | 17 | 23 | 2,6 | 70 |
| b | 17 | 7 | 2,9 | 35 |
| c | 17 | 5 | 2,3 | 14 |
| d | 17 | 2 | 3,0 | 8 |
| 2a | 14 | 34 | 2,3 | > 90 |
| b | 14 | 4,3 | 2,6 | 31,5 |
| 3a | 30,5 | 2,5 | 2,1 | 7,5 |
| b | 30,5 | < 1 | 3,6 | 1,8 |
| 4a | 49 | 2,0 | 0 | 14,3 |
| b | 49 | 1,0 | 3,7 | 4,8 |

Die Tabelle zeigt, daß PVP-Jod, hergestellt aus unbehandeltem PVP, jeweils den höchsten Jodverlust aufweist, während erfindungsgemäß zu verwendendes PVP nach gegebenenfalls angeschlossener Reinigung einen um etwa den Faktor 3 bis 9 geringeren Jodverlust hat.

**Ansprüche**

1. Verfahren zur Herstellung von Polyvinylpyrrolidon-Jod, dadurch gekennzeichnet, daß man ein Polyvinylpyrrolidon mit einem K-Wert von 10 bis 50, das einer Hydrierung unterworfen wurde, mit Jod in üblicher Weise umsetzt.

2. Verfahren nach Anspruch 1, dadurch gekennzeichnet, daß die Hydrierung des Polyvinylpyrrolidons in wäßriger Lösung mit Wasserstoff in Gegenwart eines Hydrierkatalysators durchgeführt wird.

3. Verfahren nach Anspruch 1, dadurch gekennzeichnet, daß die Hydrierung des Polyvinylpyrrolidons mit einem komplexen hydrid durchgeführt wird und gegebenenfalls anschließend das hydrierte Polyvinylpyrrolidon mit einem Anionen- und Kationenaustauscher behandelt wird.

4. Verfahren nach Anspruch 1, dadurch gekennzeichnet, daß man ein Polyvinylpyrrolidon mit einem K-Wert von 10 bis 20 verwendet.

**Claims**

1. A process for the preparation of polyvinylpyrrolidone-iodine, wherein a polyvinylpyrrolidone having a K value of from 10 to 50 which has been subjected to hydrogenation is reacted with iodine in a conventional manner.

2. A process as claimed in claim 1, wherein the hydrogenation of the polyvinylpyrrolidone is carried out in aqueous solution, using hydrogen in the presence of a hydrogenation catalyst.

3. A process as claimed in claim 1, wherein the hydrogenation of the polyvinylpyrrolidone is carried out using a complex hybride, with or without subsequent treatment of the hydrogenated polyvinylpyrrolidone with an anion exchanger and cation exchanger.

4. A process as claimed in claim 1, wherein a polyvinylpyrrolidone having a K value of from 10 to 20 is used.

**Revendications**

1. Procédé de préparation de polyvinylpyrrolidone-iode, caractérisé par le fait qu'on fait réagir avec de l'iode, de manière usuelle, une polyvinylpyrrolidone d'un indice K de 10 à 50, qui a été soumise à une hydrogénation.

2. Procédé selon la revendication 1, caractérisé par le fait que l'hydrogénation de la polyvinylpyrroli-

done est effectuée en solution aqueuse avec de l'hydrogène en présence d'un catalyseur d'hydrogénation.

3. Procédé selon la revendication 1, caractérisé par le fait que l'hydrogénation de la polyvinylpyrrolidone est effectuée avec un hydrure complexe et la polyvinylpyrrolidone hydrogénée est éventuellement ensuite traitée avec un échangeur d'anions et de cations.

4. Procédé selon la revendication 1, caractérisé par le fait que l'on utilise une polyvinylpyrrolidone d'un indice K de 10 à 20.